# EUROPEAN PATENT APPLICATION

(11) **EP 2 578 431 A1**
(43) Date of publication of application: **10.04.2013**
(21) Application number: 11789956.7
(22) Date of filing: 06.06.2011
(51) Int. Cl.: B60K 26/02, F02D 11/02, G05G 1/30

(54) **ACCELERATOR PEDAL DEVICE**

(30) Priority: 04.06.2010 JP 2010128711
(71) Applicant: Mikuni Corporation, Tokyo 101-0021 (JP)
(72) Inventor: FUKUSHIMA Yoshitomo, Odawara-shi Kanagawa 250-0055 (JP); MURAJI Tetsuo, Odawara-shi Kanagawa 250-0055 (JP); SEKIYA Mitsuru, Odawara-shi Kanagawa 250-0055 (JP)
(74) Representative: Schwabe - Sandmair - Marx
(86) International application number: PCT/JP2011/062910
(87) International publication number: WO 2011/152557

(57) **Abstract**

An accelerator pedal apparatus of the present invention includes, as a reaction force adding mechanism to add reaction force against pedaling force of an accelerator pedal, a rotation member (40) which is rotatable relatively against a pedal arm, a locking mechanism (50) which is capable of locking the rotation member when the accelerator pedal is at an arbitrary depression position, and an intermittent interlocking member (60) which intermittently interlocks the rotation member with the pedal arm so that the rotation member is interlocked with the pedal arm when the locking mechanism is not in operation and reaction force is added against depressing operation of the accelerator pedal under operation of the locking mechanism while rotation of the pedal arm is allowed with release of interlocking of the rotation member and decrease or elimination of the reaction force owing to elastic deformation caused by pedaling force which overcomes the reaction force. With the above, reaction force can be added at an arbitrary depression position and eco-driving capable of achieving fuel consumption improvement can be performed.

## Description

### TECHNICAL FIELD

The present invention relates to an accelerator pedal apparatus including a mechanism which generates reaction force (resistance force) against pedaling force of an accelerator pedal to suppress excessive depression for improving fuel consumption and the like.

### BACKGROUND ART

There have been developed a variety of systems for eco-driving to improve fuel consumption by suppressing sudden acceleration and the like of an automobile as a part of antipollution measures. As one of the above, there has been considered a method of urging to avoid sudden acceleration by adding reaction force against excessive depression of an accelerator pedal and providing a resistance feeling to pedaling force of a driver so that driving with excellent fuel-economy is maintained by suppressing sudden depression of the accelerator pedal by the driver.

Meanwhile, even with a different object, as a traditional accelerator pedal apparatus including a reaction force adding mechanism which adds reaction force against depression of an accelerator pedal, it has been known to include a pedal arm having the accelerator pedal, a torsion type return spring having one end part engaged with the pedal arm as being arranged around a rotation axis to return the pedal arm to a return position, a disc-shaped rotation stopper with which the other end of the return spring is engaged, a stepping motor which rotates the rotation stopper to a predetermined angle position and the like and to be capable of increasing reaction force of the return spring than an initial set value by rotating the rotation stopper to an appropriately-desired angle position with driving of the stepping motor (see Patent Literature 1).

Further, as an accelerator pedal apparatus including another reaction force adding mechanism, it has been known to include a pedal arm having an accelerator pedal, a torsion type return spring which is arranged around a rotation axis thereof, a rotational friction plate which is integrally rotated as being fixed to an end part of a rotation shaft, a fixed friction plate which is arranged to be capable of contacting to the rotational friction plate as facing thereto and incapable of being rotated, an actuator which moves the fixed friction plate in the rotation axis direction and the like and to be capable of increasing reaction force against depression of the accelerator pedal owing to that the fixed friction plate is pressed to the rotational friction plate by being moved in the rotation axis direction by the actuator to increase friction force (see Patent Literature 2).

Further, as an accelerator pedal apparatus including another reaction force adding mechanism, it has been known to include a pedal arm having an accelerator pedal, a compression type return spring which returns the pedal arm to a rest position, a sector-shaped displacement member which is rotated integrally with the pedal arm and which has a concave portion at an arc-shaped convex curved face having the rotation axis as the center, a boll which is urged by a spring to enter into the concave portion as being contacted to the convex curved face of the displacement member and the like and to be capable of obtaining a click feeling with depressing operation as the ball entering into the concave portion from the curved face when the accelerator pedal is depressed by a predetermined amount and the pedal arm (i.e., displacement member) reaches a predetermined rotation position (see Patent Literature 3).

Further, as an accelerator pedal apparatus including another reaction force adding mechanism, it has been known to include a pedal arm having an accelerator pedal, a compression type return spring which returns the pedal arm to a rest position, a plunger which is contacted to a part of the pedal arm when the pedal arm is depressed to a predetermined rotation position, a leaf spring through which the plunger passes with contact, a compression type coil spring which urges the plunger to return to the rest position and the like and to increase reaction force against depression of the accelerator pedal with operation of a kick-down load generating mechanism when the accelerator pedal is depressed further from a predetermined position while the kick-down load generating mechanism is structured with the plunger, the leaf spring, and the coil spring (see Patent Literature 4).

By the way, for enabling a driver to easily perform eco-driving, in order to avoid a situation that depressing cannot be performed with simply increasing reaction force during depressing operation of an accelerator pedal, it is required to be capable of performing depressing of the accelerator pedal while adding reaction force at an arbitrary depression position by performing intermittent switching of adding reaction force and removing the added reaction force so that reaction force is added when the accelerator pedal is depressed by a predetermined amount by the driver, that depressing with normal pedaling force is allowed by once removing the added reaction force when the accelerator pedal is further depressed, and that reaction force is added at a position to which the accelerator pedal is further depressed subsequently.

However, in the traditional accelerator pedal apparatus as described above, when reaction force is once added, reaction force (resistance) is simply increased against further depression of the accelerator pedal. Accordingly, it is not possible to return to a state before the reaction force is added, that is, it is not possible to remove the added reaction force. Further, it is possible to add reaction force or to generate a click feeling only at a previously-set specific depression position. Here, it is not possible to add reaction force or to obtain a click feeling at an arbitrary depression position.

### Cited Literature

### Patent Literature

Patent Literature 1: Japanese Patent Application Laid-Open No. 5-231194
Patent Literature 2: Japanese Patent Application Laid-Open No. 2004-314871
Patent Literature 3: Japanese Patent Application Laid-Open No. 2006-176001
Patent Literature 4: Japanese Patent Application Laid-Open No. 2002-283871

### SUMMARY OF THE INVENTION

To address the above issues, an object of the present invention is to provide an accelerator pedal apparatus with superior improvement of fuel consumption as enabling to easily perform eco-driving owing to capability of adding reaction force for suppressing excessive depression at arbitrary depression positions intermittently in a depressing process during depressing operation of an accelerator pedal while achieving structural simplification, reduction in part count, cost reduction, miniaturization of the whole apparatus, and the like.

An accelerator pedal apparatus of the present invention includes a pedal arm which is supported rotatably about a predetermined axis line and which is moved between a rest position and a maximum depression position with depressing operation of an accelerator pedal, a return spring which exerts urging force to return the pedal arm to the rest position, and a reaction force adding mechanism which adds reaction force against pedaling force of the accelerator pedal. Here, the reaction force adding mechanism includes a rotation member which is arranged rotatably about the axis line relatively against the pedal arm, a locking mechanism which is capable of locking the rotation member when the accelerator pedal is at an arbitrary depression position, and an intermittent interlocking member which is capable of intermittently interlocking the rotation member with the pedal arm in accordance with operation and non-operation of the locking mechanism so that the rotation member is interlocked with the pedal arm when the locking mechanism is not in operation and reaction force is added against depressing operation of the accelerator pedal under operation of the locking mechanism while rotation of the pedal arm is allowed with release of interlocking of the rotation member and decrease or elimination of the reaction force owing to elastic deformation caused by pedaling force which overcomes the reaction force.

According to the above structure, when the accelerator pedal is depressed by a driver from the rest position toward the maximum depression position in a state that the locking mechanism is not in operation, the pedal arm is rotated to the depression side while the rotation member is interlocked via the intermittent interlocking member and pedaling force is increased with increase of the urging force of the return spring. In contrast, when the accelerator pedal is returned by a driver from the maximum depression position toward the rest position, the pedal arm is returned to the rest position owing to the urging force of the return spring with decrease of the pedaling force while the rotation member is rotated as being interlocked via the intermittent interlocking member. That is, normal pedaling force characteristics without addition of reaction force are obtained.
Here, in a case of improving fuel consumption by suppressing sudden acceleration and sudden starting due to excessive depression, for example, during depressing of the accelerator pedal by the driver, the rotation member is locked at an arbitrary depression position as being incapable of moving with operation of the locking mechanism based on driving information and the like of the vehicle when the accelerator pedal reaches the depression position. Subsequently, when the accelerator pedal is to be further depressed by the driver, a resistance feeling or a click feeling can be provided against depression for the driver as reaction force being firstly added by the intermittent interlocking member. When the accelerator pedal is to be further depressed by the driver to overcome the reaction force, the added reaction force is decreased or eliminated while interlocking of the rotation member is released with elastic deformation (e.g., of the urging spring or of the own) caused by the pedaling force. Therefore, the depressing operation is allowed without locking of the pedal arm. Subsequently, when the locking mechanism is released, the rotation member is interlocked with the pedal arm via the intermittent interlocking member and depressing operation can be performed with normal pedaling force characteristics without reaction force added.
That is, owing to that locking and lock-releasing of the rotation member are appropriately performed by the locking mechanism when the accelerator pedal is at an arbitrary depression position, it is possible to perform adding of reaction force (and eliminating of the added reaction force) in a process of depressing operation intermittently in plural times. Accordingly, eco-driving can be easily performed and fuel consumption of a vehicle can be improved.

In the above structure, it is possible to adopt a configuration that the intermittent interlocking member includes a beam member having one end side connected to the rotation member, that the pedal arm includes an engaging portion which is engaged with the beam member, and that the beam member includes a stepped portion to which the engaging portion is contacted so that the rotation member is interlocked with movement of the pedal arm toward a depression side under non-operation of the locking mechanism, and an engaging piece with which the engaging portion climbed over the stepped portion with depression of the accelerator pedal is movably engaged under operation of the locking mechanism.
According to the abovementioned embodiment, the rotation member is interlocked with depressing operation of the pedal arm in a state that the engaging portion of the pedal arm is engaged with the stepped portion of the beam member and the engaging portion is movably engaged with the engaging piece after climbing over the stepped portion when the accelerator pedal is further depressed in a state that the locking mechanism is in operation. At that time, reaction force at the stepped portion is decreased or eliminated and further depressing operation of the accelerator pedal can be performed.
Here, since the intermittent interlocking member adopts the beam member which integrally defines the stepped portion and the engaging piece, the structure thereof can be simplified..

In the above structure, it is possible to adopt a configuration that the beam member is axially supported swingably against the rotation member as being made of rigid material, and that an urging spring is further provided to exert urging force to engage the beam member with the engaging portion.
According to the abovementioned structure, since the beam member is made of rigid material, it is possible to increase rigid force when the rotation member is interlocked with and rotated integrally with the pedal arm. Further, since the urging spring to urge the beam member is arranged separately from the beam member, it is possible to freely set a set load which is required for sudden increase of reaction force (pedaling force).

In the above structure, it is possible to adopt a configuration that the beam member is fixed like a cantilever to the rotation member made of elastic material and is formed to be engaged with the engaging portion with own elastic restoring force.
According to the abovementioned structure, the beam member adopts the cantilever-like beam member (e.g., cantilever-like plate spring) which is formed to be engaged with the engaging portion with own elastic restoring force while being capable of being elastically deformed of itself. Accordingly, the urging spring becomes unnecessary and the structure thereof can be simplified.

In the above structure, it is possible to adopt a configuration that the beam member is formed to have a distal end of the engaging piece closed to the axis line side (being the rotation center of the pedal arm and the rotation member) so that the rotation member is rotated to a position where the engaging portion is engaged with the stepped portion with elastic restoring force (of the urging spring or the beam member itself made of elastic material) when locking of the rotation member due to the locking mechanism is released.
According to the abovementioned structure, the engaging piece of the beam member is formed to be closed to the axis line of the pedal arm and the rotation member (e.g., to be inclined) toward the distal end from the stepped portion. Accordingly, when the locked state of the rotation member due to the locking mechanism is released, the member (the urging spring or the beam member itself made of elastic material) which is elastically deformed owing to that the engaging portion of the pedal arm is engaged with the engaging piece of the beam member can rotate the rotation member into an initial state (a state that the engaging portion is engaged with the stepped portion) of being interlocked with the pedal arm as being returned to the state before being elastically deformed with the elastic restoring force.

In the above structure, it is possible to adopt a configuration that the engaging piece of the beam member is formed as being curved concavely at a side to which the engaging portion is engaged.
According to the abovementioned structure, it is possible to easily rotate the pedal arm while decreasing reaction force to the extent possible in a state that the engaging portion is engaged with the engaging piece. In particular, since the engaging piece is formed as being concavely curved so that the curvature radius of the engaging piece is the same as the rotation radius of the engaging portion, most of reaction force is eliminated when the engaging portion climbs over the stepped portion and moves to the engaging piece. Accordingly, it is possible to set existence or non-existence of the reaction force more clearly and to obtain a click feeling more clearly.

In the above structure, it is possible to adopt a configuration that the pedal arm includes a main pedal arm which includes the accelerator pedal at a lower side from the axis line and a contact portion at an upper side from the axis line, and a subsidiary pedal arm which is pressed toward the depression side by the contact portion as being rotatably arranged about the axis line relatively against the main pedal arm and which includes the engaging portion at an upper end thereof, and that the return spring includes a first return spring which urges the subsidiary pedal arm toward the rest position and a second return spring which urges the main pedal arm toward the rest position.
According to the abovementioned structure, when the accelerator pedal is depressed toward the maximum depression position, the main pedal arm is rotated to the depression side against the urging force of the second return spring and the subsidiary pedal arm is rotated to the depression side against the first return spring as being pressed by the contact portion of the main pedal arm. In contrast, when pedaling force of the accelerator pedal is released, the main pedal arm is moved toward the rest position with the urging force of the second return spring and the subsidiary pedal arm is moved to the rest position with the urging force of the first return spring. Here, even if a return error occurs at the subsidiary pedal arm, the main pedal arm having the accelerator pedal can be reliably returned to the rest position as being separated from the subsidiary pedal arm.

In the above structure, it is possible to adopt a configuration that the locking mechanism includes a locking member which is formed to be capable of pressing the rotation member to be in a locked state with rotation in one direction and releasing the locked state with rotation in the other direction, and a drive source which rotationally drives the locking member.
According to the abovementioned structure, when the locking member is rotated in one direction by the drive source, the rotation member is locked to be incapable of being moved by the locking member. In contrast, when the locking member is rotated to the other direction by the drive source, the locking member releases locking of the rotation member and allows rotation of the rotation member. Accordingly, only by controlling the rotation direction of the drive source (and the locking member), the rotation member can be locked or interlocked with the pedal arm.

In the above structure, it is possible to adopt a configuration that the rotation member includes an arc face with a predetermined curvature radius having the axis line as the center, and that the locking member includes a convex curved face having a varying curvature radius from the rotation center to increase force to press the arc face with the rotation in the one direction.
According to the abovementioned structure, when the locking member is rotated in one direction, the pressing force of the convex curved face to the arc face of the rotation member is increased and the locked state is established. In contrast, when the locking member is rotated in the other direction, the pressing force of the convex curved face to the arc face of the rotation member is decreased and the locked state is released. That is, owing to that the locking member functions as a one-way lock (i.e., sprag), the structure thereof can be simplified. Further, locking operation and lock-releasing operation can be reliably performed in cooperation with the intermittent interlocking member which decreases or eliminates the reaction force.

In the above structure, it is possible to further include an accelerator opening sensor which detects opening of the accelerator pedal and control means which performs entire control based on a sensor signal of the accelerator opening sensor and driving information of a vehicle, and the control means may control operation of the locking mechanism based on the sensor signal and the driving information.
According to the abovementioned structure, since operation of the locking mechanism is controlled by the control means based on the sensor signal and the driving information, appropriate eco-driving can be actualized based on the driving information of the vehicle and fuel consumption improvement can be achieved accordingly.

According to the accelerator pedal apparatus having the abovementioned structure, reaction force for suppressing excessive depression can be intermittently added at arbitrary depression positions in a depressing process during depressing operation while achieving structural simplification, reduction in part count, cost reduction, miniaturization of the whole apparatus, and the like. Accordingly, it is possible to obtain an accelerator pedal apparatus with superior improvement of fuel consumption as enabling to easily perform eco-driving.

### BRIEF DESCRIPTION OF THE DRAWINGS

FIG. 1 is a side view illustrating an embodiment of an accelerator pedal apparatus according to the present invention.
FIG. 2 is a perspective view illustrating a locking mechanism included in the accelerator pedal apparatus illustrated in FIG. 1.
FIG. 3 is a partial side view of the apparatus illustrating a state that an accelerator pedal and a pedal arm are at a rest position.
FIG. 4 is a partial side view of the apparatus illustrating a state that the accelerator pedal and the pedal arm are at an arbitrary depression position and that a locking mechanism is not in operation.
FIG. 5 is a partial side view of the apparatus illustrating a state that the accelerator pedal and the pedal arm are at an arbitrary depression position and that the locking mechanism is in operation.
FIG. 6 is a partial side view of the apparatus illustrating a state that the accelerator pedal and the pedal arm are further depressed from the state that the locking mechanism is in operation.
FIG. 7 is a partial side view of the apparatus illustrating a state that a rotation member is moved as following the pedal arm after the locking mechanism is released from the state that the accelerator pedal and the pedal arm are further depressed with operation of the locking mechanism.
FIG. 8 is a graph indicating pedaling force characteristics of the accelerator pedal apparatus illustrated in FIG. 1.
FIG. 9 is a partial side view illustrating an accelerator pedal apparatus of another embodiment according to the present invention.
FIG. 10 is a partial side view further illustrating an accelerator pedal apparatus of another embodiment according to the present invention.
FIG. 11 is a partial side view further illustrating an accelerator pedal apparatus of another embodiment according to the present invention.

### EMBODIMENT OF THE INVENTION

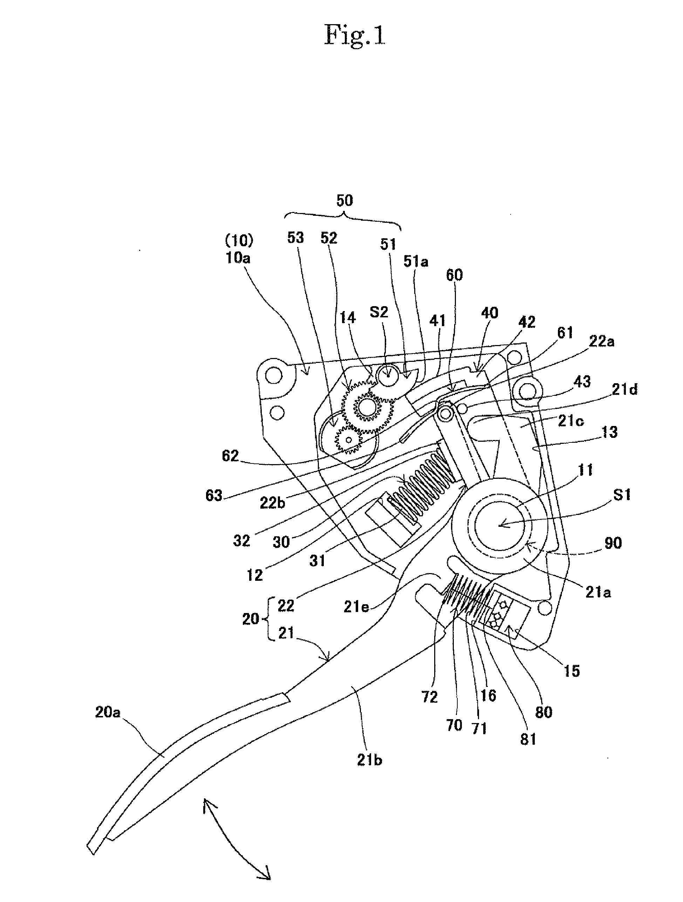

In the following, embodiments of the present invention will be described with reference to the attached drawings.
As illustrated in FIG. 1, an accelerator pedal apparatus includes a housing 10 which is fixed to a vehicle body of an automobile or the like, a main pedal arm 21 having an accelerator pedal 20a and a subsidiary pedal arm 22 as an pedal arm 20 supported rotatably about a predetermined axis line S1 against the housing 10, a first return spring 30 which exerts urging force to return the substitute pedal arm 22 to a rest position, a rotation member 40 which is arranged rotatably about the axis line S1 relatively against the main pedal arm 21, a locking mechanism 50 which is capable of locking the rotation member 40 when the accelerator pedal 20a is at an arbitrary depression position, a plate spring 60 as an intermittent interlocking member having one end side thereof connected to the rotation member 40, that is, as a beam member, a second return spring 70 which urges the main pedal arm 21 toward the rest position, a hysteresis generating mechanism 80 which generates hysteresis at pedaling force of the accelerator pedal 20a, an accelerator opening sensor 90 which detects opening of the accelerator pedal 20a (i.e., a rotation angle position of the main pedal arm 21), a control circuit (not illustrated) as control means to perform various controls, and the like. Here, a reaction force adding mechanism to add reaction force against the pedaling force of the accelerator pedal 20a is structured with the rotation member 40, the locking mechanism 50, the plate spring 60 as the intermittent interlocking member, and the like.

The housing 10 is made of resin material and is structured with a housing main body 10a and a housing cover (not illustrated) which is coupled to the housing main body 10a with screws, as illustrated in FIG. 1.
As illustrated in FIG. 1, the housing main body 10a includes a support shaft 11 which supports the pedal arm 20 swingably about the axis line S1, a receiving portion 12 which receives one end part 31 of the first return spring 30, a stopper 13 which performs positioning of the pedal arm 20 at the rest position, a stopper (not illustrated) which performs positioning of the pedal arm 20 at the maximum depression position (full-open position), a support portion 14 which supports the locking mechanism 50, an accommodating portion 15 which accommodates the hysteresis generating mechanism 80, a receiving portion 16 which receives one end part 71 of the second return spring 70, and the like.
The housing cover covers the whole as being coupled after the pedal arm 20 (the main pedal arm 21 and the subsidiary pedal arm 22), the first return spring 30, the rotation member 40 to which plate spring 60 is arranged, the locking mechanism 50, the second return spring 70, the hysteresis generating mechanism 80 and the like are assembled into the housing main body 10a as illustrated in FIG. 1.

The pedal arm 20 is made entirely of resin material and is structured with the main pedal arm 21 which is supported by the support shaft 11 of the housing main body 10a rotatably about the axis line S1 and the subsidiary pedal arm 22 which is arranged rotatably about the axis line S1 relatively against the main pedal arm 21, as illustrated in FIG. 1.
As illustrated in FIG. 1, the main pedal arm 21 includes a cylindrical portion 21a which is fitted to the support shaft 11, a lower arm portion 21b which has an accelerator pedal 20a as being extended downward from the cylindrical portion 21a, an upper arm portion 21c which is extended upward from the cylindrical portion 21a, a contact portion 21d which is formed at an upper end of the upper arm portion 21c, a receiving portion 21e which receives the other end part 72 of the second return spring 70 at an upper zone is the lower arm portion 21b, and the like.
As illustrated in FIG. 1, the subsidiary pedal arm 22 is supported rotatably against the cylindrical portion 21a of the main pedal arm 21 and is provided with a roller 22a at the upper end thereof as an engaging portion and a receiving portion 22b which receives the other end part 32 of the first return spring 30 at an intermediate zone thereof, and the like.

That is, when the accelerator pedal 20a is depressed and the main pedal arm 21 is rotated toward the maximum depression position (depression side), the contact portion 21d presses the subsidiary pedal arm 22 to the depression side and the subsidiary pedal arm 22 is rotated to the depression side against the urging force of the first return spring 30. In contrast, when depression of the accelerator pedal 20a is released, the subsidiary pedal arm 22 is rotated toward the rest position (return side) with the urging force of the second return spring 30 and the main pedal arm 21 is rotated to the return side owing to that the subsidiary pedal arm 22 presses the contact portion 21d (or with the urging force of the second return spring 70).

The first return spring 30 is a coil-shaped expansion spring of a compression type made of spring steel or the like. As illustrated in FIG. 1, the first return spring 30 has the one end part 31 contacted to the receiving portion 12 of the housing main body 10a and the other end part 32 contacted to the receiving portion 22b of the subsidiary pedal arm 22 and is attached retractably in a predetermined direction in a state of being compressed having a predetermined compression amount to exert urging force to return the subsidiary pedal arm 22 to the rest position.

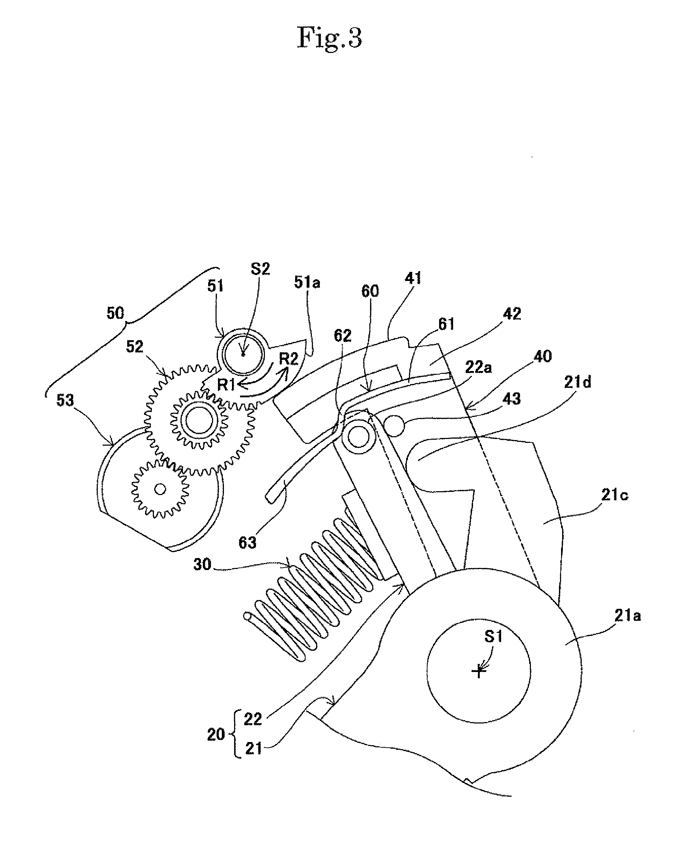

As illustrated in FIGs. 1 and 3, the rotation member 40 is supported at the lower end part thereof as being rotatable about the axis line S1 against the cylindrical portion 21a of the main pedal arm 21. At the upper end part thereof, the rotation member 40 is provided with an arc face 41 with a predetermined curvature radius having the axis line S1 as the center, a fixing portion 42 which fixes the plate spring 60 like a cantilever beam, an engaging protrusion 43 which structures a part of the intermittent interlocking member which interlocks the rotation member 40 when the subsidiary pedal arm 22 is moved to the return side, and the like.
The arc face 41 is configured to receive pressing force while a later-mentioned curved face 51a of a locking member 51 is contacted thereto.
The fixing portion 42 is configured to maintain the plate spring 60 like a cantilever beam in an elastically deformable manner as fixing a later-mentioned root portion 61 (one end side) of the plate spring 60.
The engaging protrusion 43 is configured to be apart from the subsidiary pedal arm 22 when the accelerator pedal 20a is depressed in a state that the rotation member 40 is locked and incapable of being rotated. On the other hand, when the locked state of the rotation member 40 is released, the engaging protrusion 43 is contacted to the subsidiary pedal arm 22 again owing to relative rotation of the rotation member 40 against the subsidiary pedal arm 22 with elastic restoring force of the plate spring 60 and interlocks the rotation member 40 to the subsidiary pedal arm 22 (moves the rotation member 40 along with the subsidiary pedal arm 22 when the subsidiary pedal arm 22 is moved to the return side).
That is, when the locking mechanism 50 is not in operation (in a state that locking is released), the rotation member 40 is rotated as being interlocked (jointly) with the subsidiary pedal arm 22. In contrast, when the locking mechanism 50 is in operation (in a locking state), the rotation member 40 is released from being interlocked with the subsidiary pedal arm 22 and is locked as being incapable of being rotated.

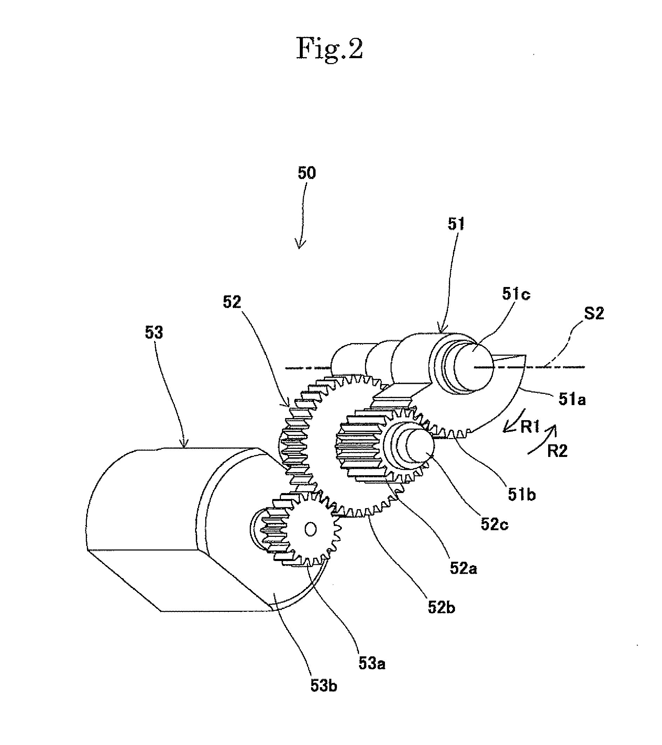

As illustrated in FIGs. 1 and 2, the locking mechanism 50 is structured with the locking member 51 which is supported rotatably about a predetermined axis line S2 against the housing 10, a reduction gear 52, a drive source 53, and the like.
As illustrated in FIGs. 2 and 3, the locking member 51 includes a convex curved face 51a which is capable of being contacted to the arc face 41 of the rotation member 40, a teeth portion 51b, a shaft portion 51c which is supported rotatably about the axis line S2 as being inserted to bearing holes of the housing main body 10a and the housing cover (not illustrated), and the like.
The curved face 51a is formed to have a continuously-varied curvature radius from the rotation center (axis line S2) so that pressing force to press the arc face 41 increases (the curvature radius becomes large) with rotation thereof in one direction (R1 direction in FIG. 3) and the pressing force to press the arc face 41 vanishes (the curvature radius becomes small) with rotation thereof in the other direction (R2 direction in FIG. 3).
As illustrated in FIGs. 2 and 3, the reduction gear 52 includes a small gear 52a which is engaged with the teeth portion 51b of the locking member 51, a large gear 52b which is engaged with a drive gear 53a of the drive source 53, a shaft portion 52c which is supported rotatably as being inserted to bearing holes of the housing main body 10a and the housing cover (not illustrated), and the like.
As illustrated in FIGs. 2 and 3, the drive source 53 includes the drive gear 53a which is engaged with the large gear 52b of the reduction gear 52, a motor portion 53b, and the like.

When the locking member 51 is rotated in one direction via the reduction gear 52 with rotation of the drive source 53 in one direction, the curved face 51a thereof exerts pressing force to the arc face 41 to lock the rotation member 40 to be incapable of being rotated. In contrast, when the lock member 51 is rotated in the other direction via the reduction gear 52 with rotation of the drive source 53 in the other direction, the curved face 51a thereof does not exert pressing force to the arc face 41 and locking of the rotation member 40 is released.

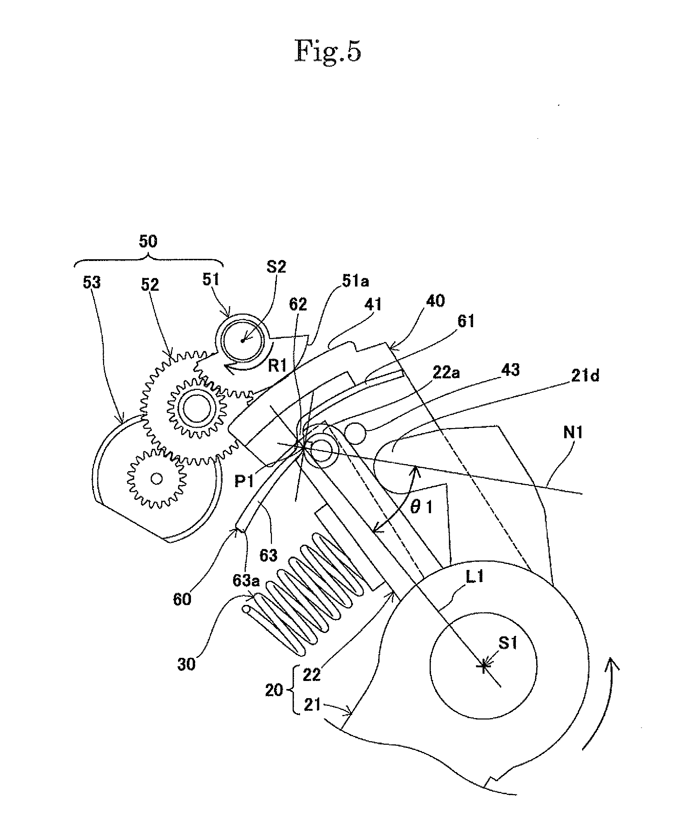

The plate spring 60 is formed into a cantilever-shaped beam member by bending a plate-shaped metal spring which is made of elastic material. As illustrated in FIGs. 1 and 3, the plate spring 60 includes the root portion 61 which is fixed to the rotation member 40, a stepped portion 62 which is formed approximately at an intermediate zone, and an engaging piece 63 extended toward a distal end from the stepped portion 62.
As illustrated in FIGs. 3 and 5, the stepped portion 62 is formed so that a connection area with the engaging piece 63 is curved (to have a predetermined curvature radius) . Further, as illustrated in FIG. 5, the stepped portion 62 is formed so that a normal line N1 at a contact point P1 with the roller 22a forms a predetermined inclination angle θ1 against a straight line L1 which passes through the axis line S1 and the contact point P1 when the lock mechanism 50 is not in operation so as to cause the rotation member 40 to be interlocked with movement of the pedal arm 20 (subsidiary pedal arm 22) toward the depression side while the roller (engaging portion) 22a of the subsidiary pedal arm 22 is contacted thereto.

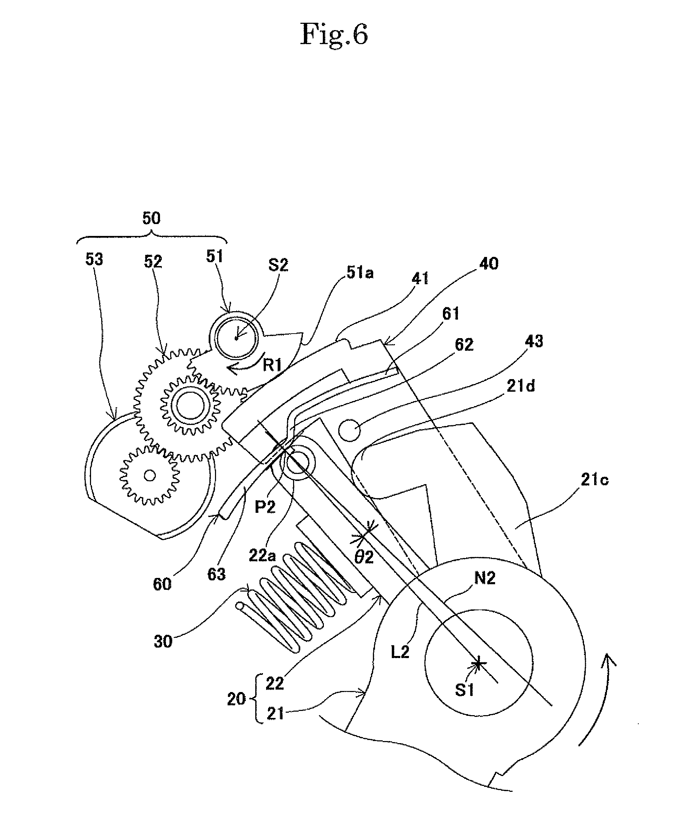

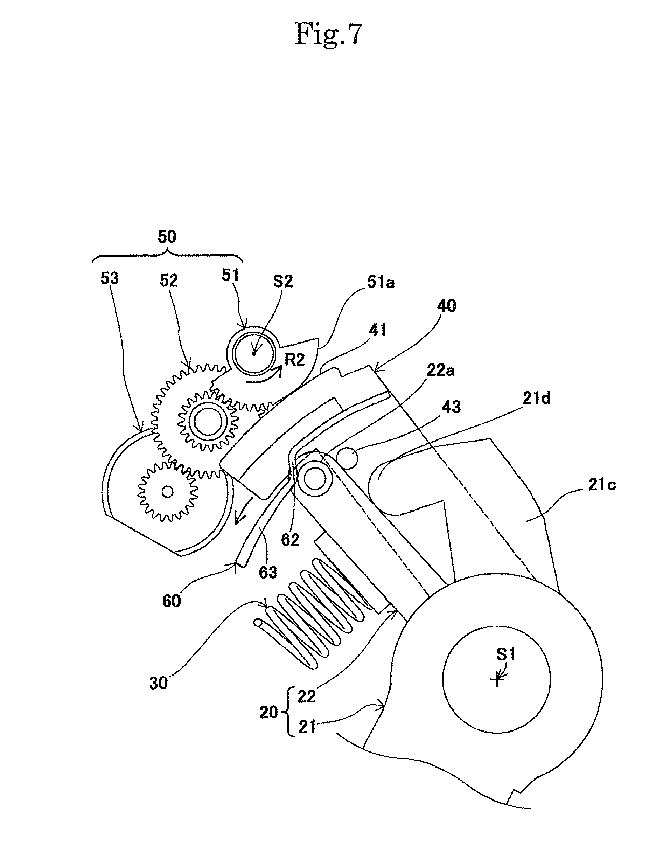

As illustrated in FIG. 6, the engaging piece 63 having a predetermined curvature radius as being curved concavely at a side to which the roller 22a is engaged is formed so that the roller 22a climbed over the stepped portion 62 with depression of the accelerator pedal 20a is movably engaged therewith while elastically deforming the plate spring 60 outwardly in a state that the locking mechanism 50 is in operation. Further, the engaging piece 63 is formed so that a normal line N2 at a contact point P2 with the roller 22a forms a small inclination angle θ2 (<θ1) as being approximately in parallel to a straight line L2 which passes through the axis line S1 and the contact point P2.
As illustrated in FIG. 5, the engaging piece 63 is formed inclined so that the distal end 63a is closer to the axis line S1 than the zone of the contact point P1 in a state that the roller 22a is engaged (contacted) with the stepped portion 62. That is, the engaging piece 63 is elastically deformed outwardly to be apart from the axis line S1 in a state that the roller 22a is engaged. Accordingly, when locking of the rotation member 40 due to the locking mechanism 50 is released, the engaging piece 63 is returned with own elastic restoring force from the elastically-deformed state illustrated in FIG. 6 to a state before deformation by rotating the rotation member 40 to the position to engage the roller 22a with the stepped portion 62 as illustrated in FIG. 7 (to the depression side).
Further, by increasing the curvature (lessening the curvature radius) at the curved zone (edge R) shifting from the stepped portion 62 to the engaging piece 63, a click feeling can be enhanced. In contrast, reaction force can be gradually decreased by decreasing the curvature (enlarging the curvature radius).

That is, the plate spring 60 interlocks the rotation member 40 with the pedal arm 20 (subsidiary pedal arm 22) when the locking mechanism 50 is not in operation. Further, in a case that the locking mechanism 50 is activated when the accelerator pedal 20a is at an arbitrary depression position and the accelerator pedal 20a is further depressed, the reaction force against the pedaling force is added to increase a resistance feeling owing to that the roller 22a is contacted to the stepped portion 62. When the accelerator pedal 20a is further depressed to overcome the reaction force (when pedaling force to overcome the reaction force is applied), the roller 22a rolls on the engaging piece 63 while elastically deforming the zone of the engaging piece 63 mainly to the outside as illustrated in FIG. 6. Accordingly, the pedal arm 20 (subsidiary pedal arm 22) is allowed to be rotated to the depression side as the added reaction force being decreased while interlocking with the rotation member 40 is released.
Subsequently, when the locking of the rotation member 40 due to the locking mechanism 50 is released, the rotation member 40 is drawn to the pedal arm 20 (subsidiary pedal arm 22) side (rotated to the depression side) with own elastic restoring force of (the engaging piece 63) of the plate spring 60 to return to an initial free state, as illustrated in FIG. 7. Accordingly, the roller 22a is engaged with the stepped portion 62 and the rotation member 40 is interlocked with the pedal arm 20 (subsidiary pedal arm 22) to be in a state of being (jointly) rotated.
In this manner, the plate spring 60 intermittently interlocks the rotation member 40 with the pedal arm 20 (subsidiary pedal arm 22) in accordance with the states of the locking mechanism 50 being in operation (the locked state of the rotation member 40) and not being in operation (the lock-released state of the rotation member 40) when the accelerator pedal 20a is at an arbitrary depression position.
Since the plate spring 60 being the beam member which integrally defines the stepped portion 62 and the engaging piece 63 is adopted as the intermittent locking member, the structure thereof can be simplified.
Here, not limited to the case of being concavely curved, the engaging piece 63 of the plate spring 60 may be formed linearly.

The second return spring 70 is a compression type coil spring made of spring steel or the like. As illustrated in FIG. 1, the second return spring 70 has one end part 71 engaged with the receiving portion 16 of the housing main body 10a and the other end part 72 engaged with the receiving portion 21e of the main pedal arm 21 and is attached retractably in a state of being compressed having a predetermined compression amount to exert urging force to return the main pedal arm 21 to the rest position.
As described above, since the second return spring 70 is formed to exert the urging force to return the main pedal arm 21 to the rest position as being directly engaged with the main pedal arm 21 in a state that the contact portion 21d of the main pedal arm 21 is disengageably engaged with the subsidiary pedal arm 22, the main pedal arm 21 is reliably returned to the rest position with the urging force of the second return spring 70 to secure safety even if an operational error such that the subsidiary pedal arm 22 does not return to the rest position occurs.
Here, the second return spring 70 is arranged to reliably exert urging force to return the main pedal arm 21 to the rest position even if an operational error occurs at the hysteresis generating mechanism 80.

As illustrated in FIG. 1, the hysteresis generation mechanism 80 is structured as a hydraulic circuit which generates large resistance force at the depression side of the accelerator pedal 20a and small resistance force at the return side of the accelerator pedal 20a and is operated to be interlocked with the main pedal arm 21 via a rod 81.
Here, not limited to the hydraulic circuit, the hysteresis generating mechanism can adopt a mechanism using friction force of a slider or another mechanism as long as being capable of obtaining pedaling force characteristics generating large pedaling force at the depression side and small pedaling force at the return side as illustrated in PIG. 8.

As illustrated in FIG. 1, the accelerator opening sensor 90 is a non-contact type magnetic sensor arranged at the cylindrical portion 21a of the main pedal arm 21 and the housing 10 in an area around the axis line S1. For example, the accelerator opening sensor 90 is structured with an annular armature made of magnetic material as being arranged at an area of the cylindrical portion 21a of the main pedal arm 21, a pair of arc-shaped permanent magnets joined to an inner circumferential face of the armature, two stators made of magnetic material as being embedded in the housing cover, two Hall elements arranged between the two stators, and the like.
Then, the accelerator opening sensor 90 detects opening (a depression amount or a rotation angle position) of the accelerator pedal 20a (main pedal arm 21).

Next, operation of the accelerator pedal apparatus will be described with reference to FIGs. 3, 7 and 8. First, when the accelerator pedal 20a is at the rest position without being depressed by a driver, the pedal arm 20 (the main pedal arm 21 and the subsidiary pedal arm 22) remains at the rest position illustrated in FIGs. 1 and 3 with the urging force of the first return spring 30 and the second return spring 70. Further, in a state that the locking mechanism 50 is not in operation, the rotation member 40 remains at the rest position as being interlocked with the pedal arm 20 (subsidiary pedal arm 22).

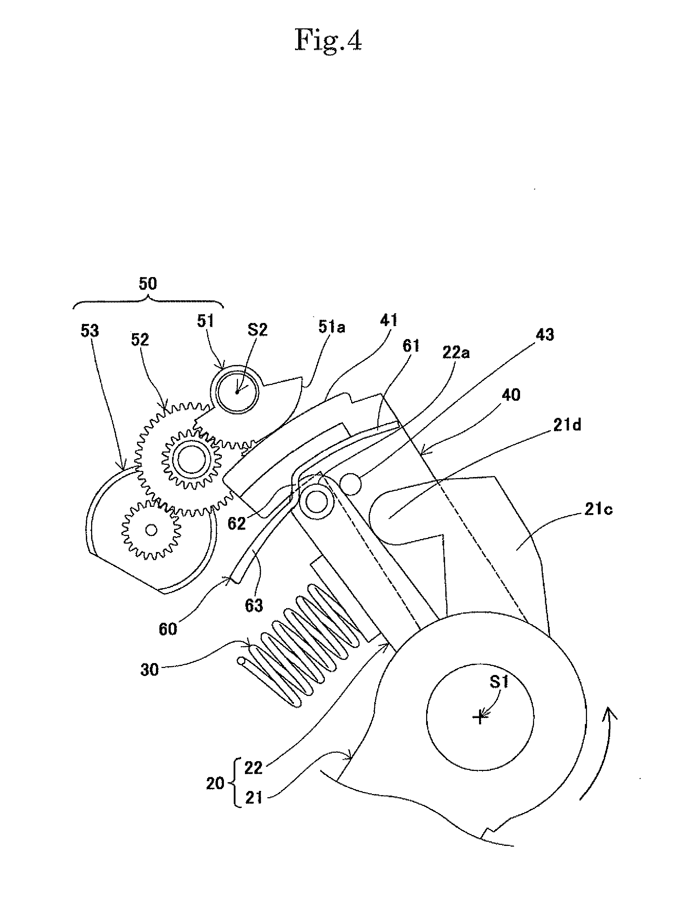

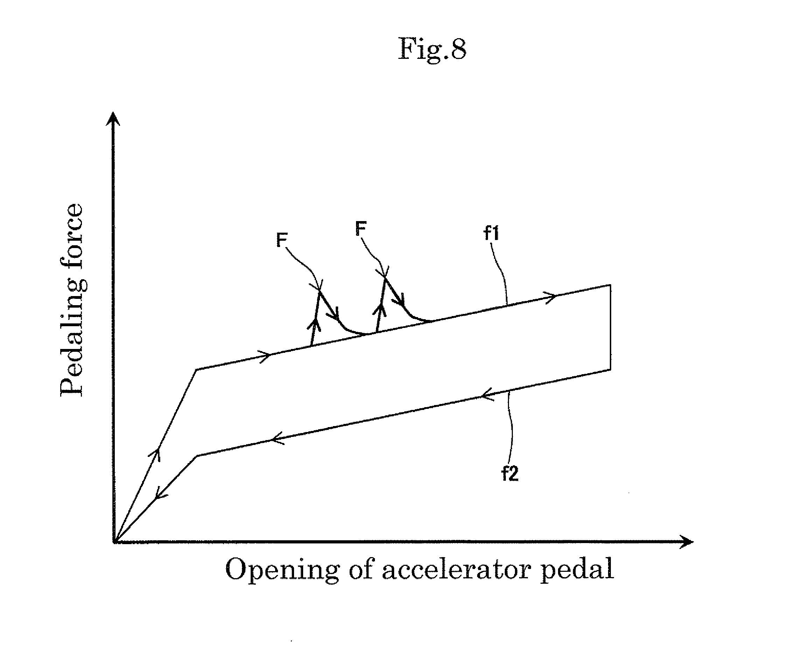

When the accelerator pedal 20a is depressed by the driver from a state of being at the rest position illustrated in FIG. 3, the pedal arm 20 (the main pedal arm 21 and the subsidiary pedal arm 22) is rotated counterclockwise against the urging force of the first return spring 30 and the second return spring 70 as illustrated in FIG. 4. At that time, since the roller 22a is contacted to the stepped portion 62 of the plate spring 60, the rotation member 40 is rotated counterclockwise as being interlocked (jointly) with the pedal arm 20 (subsidiary pedal arm 22). Pedaling force characteristics of the above are indicated by a graphic line f1 at the upper side of the FIG. 8.
In contrast, when the driver releases the pedaling force, the pedal arm 20 (the main pedal arm 21 and the subsidiary pedal arm 22) is rotated clockwise toward the rest position with the urging force of the first return spring 30 and the second return spring 70 while providing a smaller resistance load (pedal load) than a resistance load (pedal load) during depressing. The rotation member 40 is rotated clockwise toward the rest position as being interlocked (jointly) with the pedal arm 20 (subsidiary pedal arm 22). Pedaling force characteristics of the above are indicated by a graphic line f2 at the lower side of FIG. 8.

Here, in a case that sudden acceleration or sudden starting due to excessive depression is to be suppressed, for example, when the accelerator pedal 20a is depressed by the driver, the locking member 51 is rotated in a direction R1 (clockwise) and the curved face 51a thereof presses the arc face 41 when the accelerator pedal 20a is at an arbitrary depression position while the drive source 53 of the locking mechanism 50 is driven with a control signal output from a control circuit based on a sensor signal of the accelerator opening sensor 90, driving information of the vehicle and the like, as illustrated in FIG. 5, so that the rotation member 40 is locked at the rotation position as being incapable of being rotated.

Then, with subsequent depressing operation, when resistance force (reaction force) against pedaling force applied by the driver is increased owing to that the roller 22a of the subsidiary pedal arm 22 presses the stepped portion 62 of the plate spring 60 as illustrated in FIG. 5 and pedaling force overcoming the reaction force is applied, the roller 22a is shifted into a state of being engaging with the engaging piece 63 after climbing over the stepped portion 62 as illustrated in FIG. 6 and the added reaction force is deceased or eliminated. Thus, in the process of shifting form the state of FIG. 5 to the state of FIG. 6, the driver can feel a resistance feeling or a click feeling due to the reaction force and is urged to suppress sudden acceleration or sudden starting due to excessive depression.

Then, when the drive source 53 of the locking member 50 is driven with a control signal output from the control circuit based on the sensor signal of the accelerator opening sensor 90, driving information of the vehicle and the like in a state that the accelerator pedal 20a is at an arbitrary depression position as illustrated in FIG. 6 and the locking member 51 is rotated in the direction R2 (counterclockwise as illustrated in FIG. 7), pressing of the curved face 51a to the arc face 41 is released and the locked state of the rotation member 40 is released.
Accordingly, as illustrated in FIG. 7, the rotation member 40 is rotated counterclockwise as being drawn to the subsidiary pedal arm 22 side with elastic restoring force of the plate spring 60 and the roller 22a is engaged with the stepped portion 62, so that the rotation member 40 is in a state of being rotated as being interlocked (jointly) with the pedal arm 20 (subsidiary pedal arm 22).

As described above, owing to that locking and lock-releasing of the rotation member 40 are appropriately performed by the locking mechanism 50 based on the sensor signal of the accelerator opening sensor 90 and the driving information of the vehicle when the accelerator pedal 20a is at an arbitrary depression position, it is possible to perform adding of reaction force F (and eliminating of the reaction force) in a process of depressing operation intermittently in plural times, as illustrated in FIG. 8. Accordingly, eco-driving can be easily performed and fuel consumption of a vehicle can be improved. Here, a value of the reaction force F (i.e., set load) may be set at a desired value by appropriately selecting elastic force (spring constant, second moment of area, and the like) of the plate spring 60.

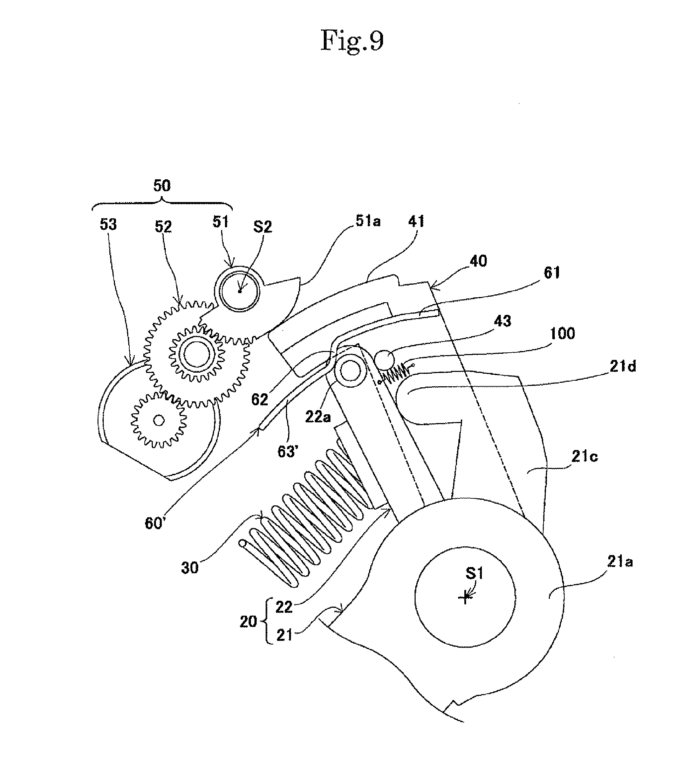

FIG. 9 illustrates another embodiment of an accelerator pedal apparatus according to the present invention. Here, the intermittent interlocking member adopts a modified plate spring 60' and a spring 100 which urges the subsidiary pedal arm 22 and the rotation member 40 in directions to be mutually closed. The rest of the above is the same as the abovementioned embodiment. Here, the same numeral is given to the same structure and description thereof will not be repeated.
That is, as illustrated in FIG. 9, the plate spring 60' includes the root portion 61, the stepped portion 62, and an engaging piece 63'. The engaging piece 63' is formed as being curved so that the curvature radius is approximately the same as a radius from the axis line S1 to the contact point with the roller 22a.
The spring 100 exerts urging force to rotate the rotation member 40 to the position where the roller 22a is engaged with the stepped portion 62 again when the locking mechanism 50 is released in a state that the roller 22a is engaged with the engaging piece 63'.
According to this embodiment, it is possible to easily rotate the pedal arm 20 (the main pedal arm 21 and the subsidiary pedal arm 22) while decreasing reaction force to the extent possible in a state that the roller 22a is engaged with the engaging piece 63'. In particular, since the engaging piece 62' is formed as being concavely curved so that the curvature radius thereof is the same as the rotation radius of the roller 22a, most of reaction force due to the engaging piece 63' is eliminated when the roller 22a climbs over the stepped portion 62 and moves to the engaging piece 63'. Accordingly, it is possible to set existence or non-existence of the reaction force more clearly and to obtain a click feeling more clearly.

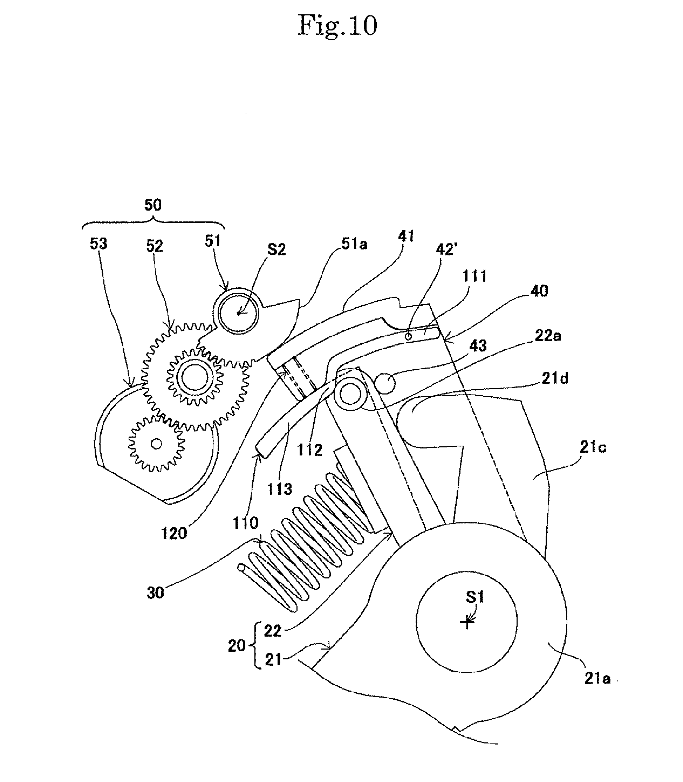

FIG. 10 further illustrates another embodiment of an accelerator pedal apparatus according to the present invention. Here, a bent member 110 made of rigid material is adopted as the intermittent interlocking member (beam member) and a compression spring 120 is adopted as an urging spring, and further, the fixing portion 42 of the rotation member 40 is switched to a support portion 42'. The rest of the above is the same as the abovementioned embodiment. Here, the same numeral is given to the same structure and description thereof will not be repeated.
That is, as illustrated in FIG. 10, the bent member 110 is formed as the beam member having high rigidity provided with a supported portion 111 which is axially supported by the support portion 42' of the rotation member 40 in a swingable manner, a stepped portion 112, and an engaging piece 113. Here, the stepped portion 112 corresponds to the abovementioned stepped portion 62 of the plate spring 60 and the engaging piece 113 corresponds to the abovementioned engaging piece 63 of the plate spring 60 excepting incapability of being elastically deformed.
The compression spring 120 urges the bent member 110 in a direction to be close to the axis line S1 as being arranged between the rotation member 40 and the bent member 110 and allows the bent member 110 to be pressed and moved in a direction to be apart from the axis line S1 by the roller 22a.

Next, operation of the accelerator pedal apparatus will be described.
First, when the accelerator pedal 20a is at the rest position without being depressed by a driver, the pedal arm 20 (the main pedal arm 21 and the subsidiary pedal arm 22) remains at the rest position as being similar to the case illustrated in FIGs. 1 and 3 with the urging force of the first return spring 30 and the second return spring 70. Further, in a state that the locking mechanism 50 is not in operation, the rotation member 40 remains at the rest position as being interlocked with the pedal arm 20 (subsidiary pedal arm 22).

When the accelerator pedal 20a is depressed by the driver from a state of being at the rest position (a state similar to the state illustrated in FIG. 3), the pedal arm 20 (the main pedal arm 21 and the subsidiary pedal arm 22) is rotated counterclockwise against the urging force of the first return spring 30 and the second return spring 70 as being similar to the case illustrated in FIG. 4. At that time, since the roller 22a is contacted to the stepped portion 112 of the bent member 110, the rotation member 40 is rotated counterclockwise as being interlocked (jointly) with the pedal arm 20 (subsidiary pedal arm 22). Pedaling force characteristics of the above are indicated by the graphic line f1 at the upper side of FIG. 8.
In contrast, when the driver releases the pedaling force, the pedal arm 20 (the main pedal arm 21 and the subsidiary pedal arm 22) is rotated clockwise toward the rest position with the urging force of the first return spring 30 and the second return spring 70 while providing a smaller resistance load (pedal load) than a resistance load (pedal load) during depressing. The rotation member 40 is rotated clockwise toward the rest position as being interlocked (jointly) with the pedal arm 20 (subsidiary pedal arm 22). Pedaling force characteristics of the above are indicated by the graphic line f2 at the lower side of FIG. 8.

Here, in a case that sudden acceleration or sudden starting due to excessive depression is to be suppressed, for example, when the accelerator pedal 20a is depressed by the driver, the locking member 51 is rotated in the direction R1 (clockwise) and the curved face 51a thereof presses the arc face 41 when the accelerator pedal 20a is at an arbitrary depression position while the drive source 53 of the locking mechanism 50 is driven with a control signal output from a control circuit based on a sensor signal of the accelerator opening sensor 90, driving information of the vehicle and the like, as being similar to the case illustrated in FIG. 5, so that the rotation member 40 is locked at the rotation position as being incapable of being rotated.

Then, with subsequent depressing operation, when resistance force (reaction force) against pedaling force applied by the driver is increased owing to that the roller 22a of the subsidiary pedal arm 22 presses the stepped portion 112 of the bent member 110 as being similar to the case illustrated in FIG. 5 and pedaling force overcoming the reaction force is applied, the compression spring 120 is elastically deformed (compressed) and the roller 22a is shifted into a state of being engaging with the engaging piece 113 after climbing over the stepped portion 112 as being similar to the case illustrated in FIG. 6, and then, the added reaction force is deceased or eliminated. In the process that the roller 22a is moved from the stepped portion 112 to the engaging piece 113, the driver can feel a resistance feeling or a click feeling due to the added reaction force and is urged to suppress sudden acceleration or sudden starting due to excessive depression.

Then, when the drive source 53 of the locking member 50 is driven with a control signal output from the control circuit based on the sensor signal of the accelerator opening sensor 90, driving information of the vehicle and the like in a state that the accelerator pedal 20a is at an arbitrary depression position as being similar to the case illustrated in FIG. 6 and the locking member 51 is rotated in the direction R2 (counterclockwise as being similar to the case illustrated in FIG. 7), pressing of the curved face 51a to the arc face 41 is released and the locked state of the rotation member 40 is released.
Accordingly, as being similar to the case illustrated in FIG. 7, the rotation member 40 is rotated counterclockwise as being drawn to the subsidiary pedal arm 22 side with elastic restoring force of the compression spring 120 and the roller 22a is engaged with the stepped portion 112, so that the rotation member 40 is in a state of being rotated as being interlocked (jointly) with the pedal arm 20 (subsidiary pedal arm 22).

As described above, owing to that locking and lock-releasing of the rotation member 40 are appropriately performed by the locking mechanism 50 based on the sensor signal of the accelerator opening sensor 90 and the driving information of the vehicle when the accelerator pedal 20a is at an arbitrary depression position, it is possible to perform adding of reaction force F (and eliminating of the reaction force) in a process of depressing operation intermittently in plural times, as illustrated in FIG. 8. Accordingly, eco-driving can be easily performed and fuel consumption of a vehicle can be improved.

In this embodiment, in particular, since the bent member 110 made of rigid material and the urging spring (compression spring 120) exerting urging force to engage the bent member 110 with the engaging portion (roller 22a) are adopted as the intermittent interlocking member, it is possible to increase rigid force when the rotation member 40 is interlocked with and rotated integrally with the pedal arm 20 (subsidiary pedal arm 22). Further, since the urging spring (compression spring 120) to urge the bent member 110 is arranged separately from the bent member 110, it is possible to freely set a set load which is required for sudden increase of reaction force (pedaling force).
Here, the compression spring 120 is adopted as the urging spring in this embodiment. However, not limited to this, it is also possible to adopt a torsion spring which exerts urging force to engage the bent member 110 with the engaging portion (roller 22a) as being arranged around the support portion 42' which axially supports the bent member 110 or to adopt an urging spring with another configuration.

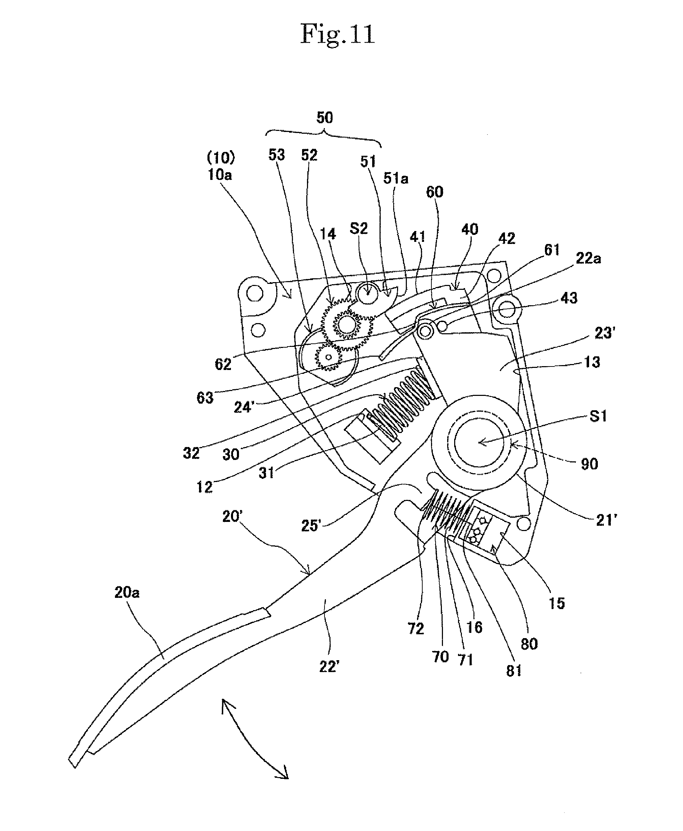

FIG. 11 further illustrates another embodiment of an accelerator pedal apparatus according to the present invention. Here, an integrated type pedal arm 20' is adopted as a pedal arm as modifying the pedal arm 20 which includes the main pedal arm 21 and the subsidiary pedal arm 22. The rest of the above is the same as the abovementioned embodiment. Here, the same numeral is given to the same structure and description thereof will not be repeated.
That is, as illustrated in FIG. 11, the pedal arm 20' includes a cylindrical portion 21', a lower arm portion 22' which has the accelerator pedal 20a as being extended downward from the cylindrical portion 21', an upper arm portion 23' which has the roller 22a at the upper end thereof as the engaging portion as being extended upward from the cylindrical portion 21', a receiving portion 24' which receives the other end part 32 of the first return spring 30 as being formed at an intermediate zone of the upper arm portion 23' , and a receiving portion 25' which receives the other end part 72 of the second return spring 70 as being formed at the lower arm portion 22'.
In this embodiment, as long as the rotation member 40 is not kept locked owing to an operational error of the locking mechanism 50, return operation of the pedal arm 20' can be ensured. Similarly to the abovementioned embodiment, owing to that locking and lock-releasing of the rotation member 40 are appropriately performed by the locking mechanism 50 based on the sensor signal of the accelerator opening sensor 90 and the driving information of the vehicle when the accelerator pedal 20a is at an arbitrary depression position, it is possible to perform adding of reaction force F (and eliminating of the reaction force) in a process of depressing operation intermittently in plural times, as illustrated in FIG. 8. Accordingly, eco-driving can be easily performed and fuel consumption of a vehicle can be improved.

In the abovementioned embodiments, the reaction force adding mechanism is adopted in the structure having the hysteresis generating mechanism. However, not limited to this, it is also possible to adopt the reaction force adding mechanism in a structure that the hysteresis generating mechanism is eliminated.
In the abovementioned embodiments, the locking mechanism included in the reaction force adding mechanism includes the locking member 51, the reduction gear 52, and the drive source 53. However, not limited to this, another mechanism may be adopted as long as being capable of locking the rotation member 40 when the accelerator pedal 20a is at an arbitrary depression position.
In the abovementioned embodiments, the intermittent interlocking mechanism included in the reaction force adding mechanism is described as the plate spring 60, 60' being the beam member made of elastic material or the bent member 110 being the beam member made of rigid material and the urging spring (compression spring 120). However, not limited to this, another member or mechanism may be adopted as long as being capable of intermittently interlocking the rotation member with the pedal arm in accordance with operation and non-operation of the locking mechanism.

### INDUSTRIAL APPLICABILITY

As described above, according to the accelerator pedal apparatus of the present invention, reaction force for suppressing excessive depression can be intermittently added at arbitrary depression positions in a depressing process during depressing operation of an accelerator pedal while achieving structural simplification, reduction in part count, cost reduction, miniaturization of the whole apparatus, and the like. Accordingly, it is possible to obtain an accelerator pedal apparatus with superior improvement of fuel consumption as enabling to easily perform eco-driving. Therefore, the present invention is useful for motorcycles and other vehicles as well as being capable of being applied to automobiles.

### EXPLANATION OF REFERENCES

- S1: Axis line
- 10: Housing
- 10a: Housing main body
- 11: Support shaft
- 12: Receiving portion
- 13: Stopper
- 14: Support portion
- 15: Accommodating portion
- 16: Receiving portion
- 20, 20': Pedal arm
- 20a: Accelerator pedal
- 21: Main pedal arm
- 21a, 21': Cylindrical portion
- 21b, 22': Lower arm portion
- 21c, 23': Upper arm portion
- 21d: Contact portion
- 21e, 22b, 24', 25': Receiving portion
- 22: Subsidiary pedal arm
- 22a: Roller (Engaging portion)
- 30: First return spring
- 40: Rotation member (Reaction force adding mechanism)
- 41: Arc face
- 42: Fixing portion
- 42': Supporting portion
- 43: Engaging protrusion
- 50: Locking mechanism (Reaction force adding mechanism)
- 51: Locking member
- S2: Axis line
- 51a: Curved face
- 51b: Teeth portion
- 51c: Shaft portion
- 52: Reduction gear
- 52a: Small gear
- 52b: Large gear
- 52c: Shaft portion
- 53: Drive source
- 53a: Drive gear
- 53b: Motor portion
- 60, 60': Plate spring (beam member, intermittent interlocking member, reaction force adding mechanism)
- 61: Root portion
- 62: Stepped portion
- 63, 63': Engaging piece
- 63a: Distal end
- 70: Second return spring
- 80: Hysteresis generating mechanism
- 90: Accelerator opening sensor
- 100: Spring
- 110: Bent member (beam member, intermittent interlocking member, reaction force adding mechanism)
- 111: Supported portion
- 112: Stepped portion
- 113: Engaging piece
- 120: Compressed spring (Urging spring)

## Claims

1. An accelerator pedal apparatus, comprising;
a pedal arm which is supported rotatably about a predetermined axis line and which is moved between a rest position and a maximum depression position with depressing operation of an accelerator pedal;
a return spring which exerts urging force to return the pedal arm to the rest position; and
a reaction force adding mechanism which adds reaction force against pedaling force of the accelerator pedal,
wherein the reaction force adding mechanism includes a rotation member which is arranged rotatably about the axis line relatively against the pedal arm, a locking mechanism which is capable of locking the rotation member when the accelerator pedal is at an arbitrary depression position, and an intermittent interlocking member which is capable of intermittently interlocking the rotation member with the pedal arm in accordance with operation and non-operation of the locking mechanism so that the rotation member is interlocked with the pedal arm when the locking mechanism is not in operation and reaction force is added against depressing operation of the accelerator pedal under operation of the locking mechanism while rotation of the pedal arm is allowed with release of interlocking of the rotation member and decrease or elimination of the reaction force owing to elastic deformation caused by pedaling force which overcomes the reaction force.

2. The accelerator pedal apparatus according to claim 1,
wherein the intermittent interlocking member includes a beam member having one end side connected to the rotation member,
the pedal arm includes an engaging portion which is engaged with the beam member, and
the beam member includes a stepped portion to which the engaging portion is contacted so that the rotation member is interlocked with movement of the pedal arm toward a depression side under non-operation of the locking mechanism, and an engaging piece with which the engaging portion climbed over the stepped portion with depression of the accelerator pedal is movably engaged under operation of the locking mechanism.

3. The accelerator pedal apparatus according to claim 2, wherein the beam member is axially supported swingably against the rotation member as being made of rigid material, and
an urging spring is further provided to exert urging force to engage the beam member with the engaging portion.

4. The accelerator pedal apparatus according to claim 2,
wherein the beam member is fixed like a cantilever to the rotation member made of elastic material and is formed to be engaged with the engaging portion with own elastic restoring force.

5. The accelerator pedal apparatus according to claim 3 or claim 4,
wherein the beam member is formed to have a distal end of the engaging piece closed to the axis line side so that the rotation member is rotated to a position where the engaging portion is engaged with the stepped portion with elastic restoring force when locking of the rotation member due to the locking mechanism is released.

6. The accelerator pedal apparatus according to any one of claims 3 to 5,
wherein the engaging piece of the beam member is formed as being curved concavely at a side to which the engaging portion is engaged.

7. The accelerator pedal apparatus according to any one of claims 2 to 6,
wherein the pedal arm includes a main pedal arm which includes the accelerator pedal at a lower side from the axis line and a contact portion at an upper side from the axis line, and a subsidiary pedal arm which is pressed toward the depression side by the contact portion as being rotatably arranged about the axis line relatively against the main pedal arm and which includes the engaging portion at an upper end thereof, and
the return spring includes a first return spring which urges the subsidiary pedal arm toward the rest position and a second return spring which urges the main pedal arm toward the rest position.

8. The accelerator pedal apparatus according to any one of claims 1 to 7,
wherein the locking mechanism includes a locking member which is formed to be capable of pressing the rotation member to be in a locked state with rotation in one direction and releasing the locked state with rotation in the other direction, and a drive source which rotationally drives the locking member.

9. The accelerator pedal apparatus according to claim 8, wherein the rotation member includes an arc face with a predetermined curvature radius having the axis line as the center, and
the locking member includes a convex curved face having a varying curvature radius from the rotation center to increase force to press the arc face with the rotation in the one direction.

10. The accelerator pedal apparatus according to claim 8, further comprising an accelerator opening sensor which detects opening of the accelerator pedal, and control means which performs entire control based on a sensor signal of the accelerator opening sensor and driving information of a vehicle,
wherein the control means controls operation of the locking mechanism based on the sensor signal and the driving information.
